Europäisches Patentamt

European Patent Office

Office européen des brevets

(11) Publication number: **0 351 084**
**A2**

(12) **EUROPEAN PATENT APPLICATION**

(21) Application number: 89306369.3

(22) Date of filing: 23.06.89

(51) Int. Cl.⁴: **C04B 35/44 , C04B 35/00 , C04B 35/02**

(30) Priority: 11.07.88 GB 8816465

(43) Date of publication of application:
**17.01.90 Bulletin 90/03**

(84) Designated Contracting States:
**AT BE DE ES FR GB IT NL**

(71) Applicant: Shaw, Richard Dudley
"Dunedin" High Elms Road
Downe Orpington Kent BR6 7JN(GB)

(72) Inventor: Shaw, Richard Dudley
"Dunedin" High Elms Road
Downe Orpington Kent BR6 7JN(GB)

(74) Representative: Daley, Michael John et al
F.J. CLEVELAND & COMPANY 40/43
Chancery Lane
London, WC2A 1JQ(GB)

(54) **Binding of basic refractories.**

(57) A basic refractory aggregate comprising spinel grains may be set with a phosphate binder. Ammonium polyphosphate is preferred and a basic refractory such as magnesite may be mixed with the spinel.

EP 0 351 084 A2

## BINDING OF BASIC REFRACTORIES

This invention relates to the manufacture of shaped refractory bodies.

The invention is particularly concerned with a process for manufacturing a shaped refractory body which comprises mixing refractory grains with a liquid binder to form a fluid slurry of mouldable consistency. The system of grains and binder reacts chemically to set into a rigid self-supporting shape termed a "green" shape. This green shape can be taken from the mold or other former and fired to produce the desired refractory body. Such "chemical" systems are typified in the prior art by the use of binding liquids based on the alkoxides of silica and alumina. Thus a liquid ethyl silicate in admixture with refractory grains can be caused to set into a green shape by some appropriate catalyst. Such a binding system allows complicated shapes to be cast with the necessary control of binding speeds.

However, ethyl silicates and similar compounds based on silica are not suitable for binding basic refractories such as magnesites; the acidic silica reacts with the basic refractory. There is an increasing demand for basis refractories, particularly in furnaces, and to date no suitable chemical setting system for these basic refractories has been found.

According to the present invention the basic refractory is or contains a spinel and the binding liquid comprises a phosphate.

The most common mildly basic spinel, found in nature as a mineral, is magnesium meta-aluminate $MgAl_2O_4$.

It is believed that this common spinel in finely ground form reacts with a suitable acidic phosphate to form a polymerisable phosphate which sets in a controllable manner to form the green shape. The alumina part of a spinel does not react with the phosphate and this may be a factor in controlling the reaction speed. Chromite is another possible spinel this being ferro-magnesia chromite $(Fe(II)MgCr_2(III)O_4$, chromia playing the same role as alumina in the common spinel and magnesia being partially replaced by ferrous oxide.

A wide range of phosphates may be used and indeed phosphoric acid itself is a possibility though this tends to provide an excessively rapid reaction which is difficult to use and tends to form swelling or bloating in the green shape. Aluminium orthophosphate is also possible as is chromium phosphate but both these substances tend to react too rapidly. Ammonium phosphates, particularly polyphosphates are preferred as these are less strongly reactive with the basic refractory and provide slower setting times. A further advantage of ammonium phosphate is that only the phosphate finds it way into the sintered shape, the ammonium moiety being dispersed. Sodium phosphate is a further possibility though, this by contrast, tends to react too slowly. Finally it should be noted that phosphates leave a good refractory residue after firing.

The speed of reaction can be increased, if desired, by the addition of a traditional basic refractory such as dolomite, lime or magnesite. Reaction speed is thus dependent on (a) the type of phosphate and (b) the basicity of the refractory adjusted by the addition of basic refractory grains to the spinel.

A particularly preferred system will comprises spinel grains, basic refractory grains and an ammonium polyphosphate.

Indeed in certain circumstances the invention contemplates total replacement of the spinel by a basic refractory. In these circumstances the ammonium polyphosphate or equivalent must be used.

It should be noted that phosphate binders have been proposed for refractories but not chemically set to a green body as set out above. The prior art use of phosphates contemplates simply mixing the liquid phosphate with the refractory powder and compressing the clay-like substance thus obtained to the desired shape.

The following examples illustrate the invention. All mesh sizes are British Standard Mesh. In order to assist identification of refractory grains suppliers' names are inserted before the grain sizes. The spinels are common spinels fused or calcined.

EXAMPLE I

A basic refractory aggregate is made up of:
Magnesite (Britmag) -8 + 22 mesh 5.5 parts by weight
Spinel Fused (Sohio) -40 mesh 2 parts by weight
Spinel Fused (Sohio) -325 mesh 1.25 parts by weight
Spinel Calcined (Steetly) -325 mesh 1.25 parts by weight

To this aggregate to form a slurry is added alumina orthophosphate solution (48%) at a ratio of 81 ccs per kilogram of the refractory mixture and sufficient water to enable flow depending upon application. The water content is typically approximately a further 10-20 ccs per kilo. The slurry set to a green shape in a controlled manner bur rather rapidly in approximately 5 minutes.

EXAMPLE II

A refractory aggregate as in Example I is mixed with the bonding liquid Clinochem P8. Clinochem P8 is a proprietary polyammonium phosphate containing 36% ± 0.2% w/w $P_2O_5$ and 10% ± 0.2% w/w $NH_3$ in solution.

The product contains:-

$NH_4H_2PO_4$, $(NH_4)_2HPO_4$, $(NH_4)_3HP_2O_7$

and

$(NH_4)_5P_3O_{10}$

81 ccs of this bonding liquid are added to 1 kilo of the refractory aggregate to produce a readily castable fluid slurry mixture which will set to a green shape in 1 hour which is a more suitable and controlled rate than that of Example I.

EXAMPLE III

Aluminium ortho phosphate (AOP) solution (50%) was diluted to 80% AOP (50%) 20% $H_2O$. This dilute solution was added at 85 ccs per kilo to a pure Spinel mix as follows:

|  | Mesh sizes |
| --- | --- |
| 4.5 Kgs Spinel (Steetley) | 1/8 -1/16 |
| 2.0 Kgs Spinel (Steetley) | -1/16 + 22 |
| 1.0 Kgs Spinel (Steetley) | - 22 |
| 2.5 Kgs Spinel (Steetley) | - 300 |

At 17°C the setting time was 6 minutes.

EXAMPLE IV

Aluminium ortho phosphate as in Example III was mixed (85cc per kilo) with the following:-

|  | Mesh Sizes |
| --- | --- |
| 5.5 Kgs Magnesite (Steetley) | -1/8 + 1/16 |
| 2.0 Kgs Magnesite (Steetley) | - 22 |
| 2.5 Kgs Spinel (Steetley) | -300 |

At 70°C the setting time was 3 minutes.

The setting times in Examples III and IV were rather too rapid for good control.

EXAMPLE V

Ammonium polyphosphate (Clinochem P8) was added to a Magnesite mix approximately as follows:-

3

|  | Mesh sizes |
|---|---|
| 5.0 Kgs Magnesite (Steetley) | -1/8 + 1/16 |
| 3.0 Kgs Magnesite (Steetley) | - 22 |
| 2.0 Kgs Magnesite (Steetley) | B Mill Fines freshly ground |

At approximately 85ccs per kilo a slurry suitable for a castable was obtained with a useful setting time of 4 hours at 17°C. Again 4 hours is a more useful time than those of Examples 3 and 4.

EXAMPLE VI

The invention may be used in the manufacture of bodies including graphite. The aggregate composition is:

| 1 Spinel made by Steetley | 50% by vol. |
|---|---|
| -200 Spinel made by Steetley | 20% by vol. |
| -200 Flake graphite | 20% by vol. |

represents a Spinel Graphite body of approximately 10% Carbon x wgt. Such a mixture, if mixed with Clinochem P8 as above gives a castable slurry and, when set and fired gives a firm strong body useful in the steel industry.

EXAMPLE VII

A refractory mix was prepared as follows:

| 35% | Spinel | 8/10 |
|---|---|---|
| 20% | Spinel | 10/36 |
| 14% | Spinel | -40 |
| 3% | Magnesite | M98 |
| 22% | Spinel | -325 |
| 5% | Chromic Oxide | -325 |
| 99% | Impurities and phosphate balance | |

1Kg of the above was mixed with 74ccs of Clinochem P8 formed into a body, set (8 minutes and 17°C) and fired.
Results after firing:

| Chemical Composition: | | |
|---|---|---|
| $P_2O_5$ | | 2.85% |
| $SiO_2$ | > | .11% |
| $Al_2O_3$ | | 62.1 % |
| $Cr_2O_3$ | | 5.26% |
| $Fe_2O_3$ | | 0.09% |
| CaO | | 0.35% |
| MgO | | 29.1 % |
| Alkalis | > | 0.08% |
| Bulk density g/cc | | 2.65 |
| % Porosity | | 24.00 |
| Water absorption % | | 9.09 |
| Apparent specific gravity | | 3.472 |
| (MPa) MOR Room temperature | | 2.4 |
| (MPa) Cold crush | | 74.5 |

This fired refractory has wide application in the steel industry.

**Claims**

1. A method of manufacturing a refractory object which comprises mixing basic refractory grains with a binding liquid to form a fluid settable system, causing or allowing the system to set and firing the set shape characterised in that the refractory grains are wholly or partially spinel grains and in that the binding liquid is or contains a phosphate.

2. A method as claimed in Claim 1 wherein the phosphate is aluminium orthophosphate.

3. A method as claimed in Claim 1 wherein the phosphate is polyammonium phosphate.

4. A method as claimed in Claim 3 wherein the spinel is replaced by a basic refractory.

5. A settable system of basic refractory grains, comprising or consisting of a spinel and a liquid phosphate.

6. A refractory object produced by the method of Claim 1 or Claim 4.